# FASCICULE DE BREVET EUROPEEN

(11) **EP 3 475 600 B1**
(45) Date de publication et mention de la délivrance du brevet: **02.08.2023**
(21) Numéro de dépôt: 17745384.2
(22) Date de dépôt: 20.06.2017
(51) Int. Cl.: F16L 3/12, B60R 16/02, F16L 3/22, F16L 3/237, B60K 11/02, B60H 1/00

(54) **ENSEMBLE COMPRENANT UN CONDUIT D'AMENÉE DE LIQUIDE DE REFROIDISSEMENT ET UN ENSEMBLE DE FIXATION DU CONDUIT DANS UN VÉHICULE AUTOMOBILE ET PROCÉDÉ DE FIXATION CORRESPONDANT**
ANORDNUNG MIT EINER KÜHLMITTELZUFUHR-LEITUNG UND EINER ANORDNUNG ZUR BEFESTIGUNG DER KÜHLMITTELZUFUHR-LEITUNG IN EINEM KRAFTFAHRZEUG UND ENTSPRECHENDES BEFESTIGUNGSVERFAHREN
ASSEMBLY COMPRISING A COOLANT SUPPLY CONDUIT AND AN ASSEMBLY FOR FIXING THE CONDUIT IN A MOTOR VEHICLE AND CORRESPONDING FIXING METHOD

(30) Priorité: 23.06.2016 FR 1655856
(43) Date de publication de la demande: 01.05.2019
(73) Titulaire: Renault s.a.s, 92100 Boulogne Billancourt (FR)
(72) Inventeur: GRUET, Didier, 78740 Vaux Sur Seine (FR)
(74) Mandataire: Renault Group
(86) Numéro de dépôt international: PCT/FR2017/051620
(87) Numéro de publication internationale: WO 2017/220917

(56) Documents cités:
- EP-A1- 1 118 776
- EP-A2- 1 847 755
- US-A1- 2012 205 501

## Description

La présente invention se rapporte à un ensemble de fixation d'un conduit d'amenée de liquide de refroidissement dans un véhicule automobile.

Dans le domaine des véhicules automobiles, l'agencement des éléments installés autour du moteur est fréquemment source de problèmes. En effet, la simplicité de montage et l'accessibilité des éléments pour la maintenance s'ajoutent aux exigences de solidité et de fiabilité de l'installation.

En particulier, un problème connu concerne la difficulté de fixer correctement et de manière relativement simple un conduit d'amenée d'eau du circuit de refroidissement du moteur.

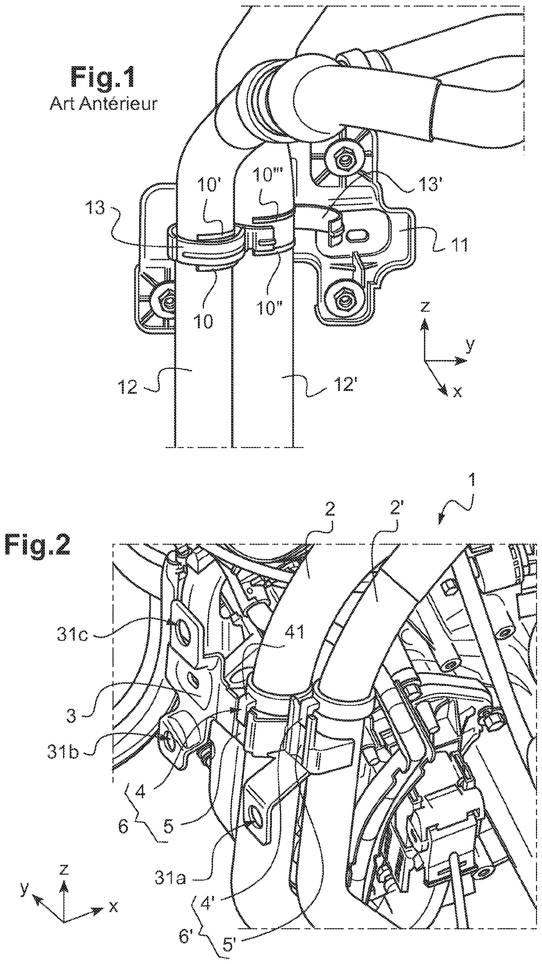

Une solution connue, représentée en figure 1, comprend une platine 11 fixée sur la caisse avant d'un véhicule automobile et présentant deux paires de pinces de fixation 13, 13' destinées chacune à maintenir fixe un conduit d'amenée 12, 12' de liquide de refroidissement.

Chaque conduit 12,12' de l'art antérieur selon la figure 1 présente deux marques imprimées 10-10‴ sur sa circonférence extérieure, servant de repères. Chaque conduit 12,12' est aligné avec respectivement une pince de fixation 13, 13' afin qu'elle soit refermée entre les marques 10-10‴. Cette solution présente l'inconvénient d'être relativement complexe lors du montage. En effet, l'encombrement du moteur rend l'alignement de la pince 13, 13' avec les marques de chaque conduit 12, 12' associées peu aisée et augmente le temps nécessaire pour fixer à la bonne position le conduit d'amenée 12, 12' sur la caisse du véhicule automobile.

EP 1 847 755 A et EP 1 118 776 A décrivent d'autres solutions d'assemblage d'un conduit sur une caisse sans pour autant permettre un assemblage en aveugle.

Aussi, il existe un besoin d'un ensemble de fixation d'un conduit d'amenée permettant une installation plus aisée.

On propose un ensemble comprenant un conduit d'amenée (2, 2') de liquide de refroidissement et un ensemble de fixation du conduit sur une caisse de véhicule automobile, l'ensemble de fixation comprenant une platine support destinée à être montée en position fixe sur ladite caisse, et des moyens de fixation pour fixer ledit conduit à ladite platine support.

Lesdits moyens de fixation comprennent une bague emprisonnant ledit conduit d'amenée et une patte de fixation destinée à être ancrée sur ladite platine support. Ladite bague est obtenue par surmoulage sur ledit conduit d'amenée. Ladite patte de fixation s'étend parallèlement à un axe de ladite bague de sorte que le conduit d'amenée peut être fixé par un mouvement d'enclenchement de la patte de fixation à la platine support parallèle à l'axe du conduit d'amenée au niveau de la bague.

Ainsi, on peut pré-positionner la bague sur le conduit d'amenée et la fixer au conduit d'amenée avec la seule étape de surmoulage.

Ainsi, on pourra fixer le conduit d'amenée par un mouvement d'enclenchement de la patte de fixation à la platine support parallèle à l'axe du conduit d'amenée au niveau de la bague, ce qui constitue un mouvement d'installation relativement aisé à effectuer lors du montage

Ainsi, il est relativement aisé d'installer le conduit d'amenée de liquide de refroidissement en position fixe sur la caisse du véhicule automobile.

En effet, la bague, qui présente une forme continue refermée sur elle-même, est installée autour du conduit d'amenée de sorte que la patte de fixation est pré-positionnée par rapport au conduit d'amenée. Aussi, il suffit d'enclencher cette patte de fixation sur la platine support pour que le conduit d'amenée soit installé sur à la caisse du véhicule automobile.

Une telle opération est plus simple que les solutions connues dans l'art antérieur, où il est nécessaire lors de l'installation de refermer les pinces de fixation autour du conduit d'amenée à la position repérée par des marques circonférentielles, ce qui, lors du montage, au voisinage du moteur du véhicule automobile, est une opération peu aisée.

Avantageusement, les moyens de fixation comprennent un logement ménagé dans ladite platine support pour recevoir ladite patte de fixation. Ainsi, on obtient des moyens de fixation plus économiques, car nécessitant une faible quantité de matière, et peu volumineux car intégrés à la platine support.

Avantageusement, ladite patte de fixation présente à une extrémité libre un ergot anti-retour interdisant le retrait de la patte de fixation après qu'elle a été ancrée sur ladite platine support. Ainsi, on améliore le maintien de la patte de fixation à la platine support, en particulier lorsque le conduit d'amenée est soumis aux mouvements du véhicule automobile en fonctionnement.

Avantageusement, l'ensemble comprend deux conduits d'amenée associés chacun à un moyen de fixation distinct. En particulier, les deux conduits correspondent à un conduit d'arrivé du liquide de refroidissement au moteur et un conduit d'évacuation du liquide de refroidissement du moteur.

L'invention concerne aussi un procédé de fixation d'un conduit d'amenée de liquide de refroidissement sur une caisse de véhicule automobile comprenant une étape d'obtention de moyens de fixation comportant une bague emprisonnant ledit conduit d'amenée et une patte de fixation destinée à être ancrée sur une platine support montée en position fixe sur ladite caisse du véhicule automobile, ladite patte de fixation s'étendant parallèlement à un axe de ladite bague de sorte que le conduit d'amenée peut être fixé par un mouvement d'enclenchement de la patte de fixation à la platine support parallèle à l'axe du conduit d'amenée au niveau de la bague, l'étape d'obtention desdits moyens de fixation comprend une étape de surmoulage de ladite bague sur ledit conduit d'amenée.

Ainsi, l'étape d'obtention des moyens de fixation, réalisée avant le montage rend le montage du conduit d'amenée sur la caisse du véhicule automobile plus rapide et plus simple.

Avantageusement, le procédé comprend en outre une étape de fixation du conduit au cours de laquelle on ancre ladite patte de fixation dans un logement de ladite platine.

Par exemple, on clipse la patte de fixation dans le logement de la platine support.

L'invention concerne aussi un véhicule automobile comprenant un ensemble comprenant un conduit et un ensemble de fixation d'un conduit d'amenée tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est une représentation d'un ensemble de fixation connu dans l'art antérieur ;
- la figure 2 est une vue en perspective d'un ensemble de fixation selon un premier mode de réalisation de l'invention ;
- la figure 3 est une autre vue en perspective d'un ensemble de fixation selon le mode de réalisation de la figure 2 ; et
- la figure 4 est une vue de côté de l'ensemble de fixation selon le mode de réalisation de la figure 2.

Dans la présente description, les termes avant, arrière, supérieur, inférieur, font référence aux directions avant et arrière du véhicule, lorsque le conduit d'amenée est fixé par les moyens de fixation selon l'invention à la caisse du véhicule automobile. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

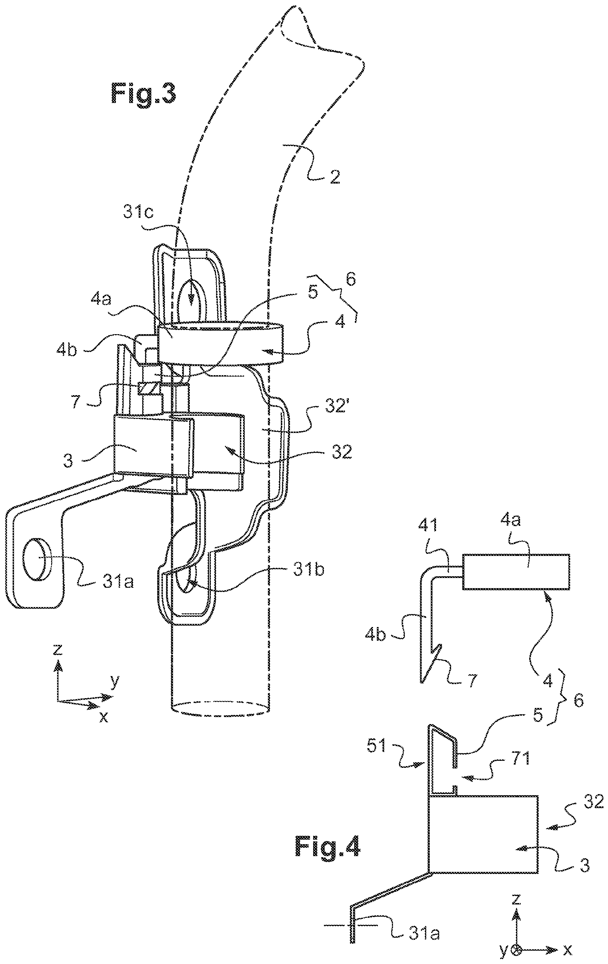

En référence aux figures 2 et 3, un conduit d'amenée 2 de liquide de refroidissement permet la circulation du liquide de refroidissement entre un réservoir et le moteur d'un véhicule automobile.

Pour permettre le maintien du conduit d'amenée 2 lors du fonctionnement du véhicule automobile, ce conduit 2 est fixé sur la caisse du véhicule automobile. A cet effet, un ensemble de fixation 1 permet de fixer le conduit d'amenée 2 à la caisse du véhicule automobile.

L'ensemble de fixation comprend une platine support 3 destinée à être montée en position fixe sur la caisse du véhicule automobile.

La platine support 3 présente trois orifices 31a, 31b, 31c destinés à être traversés chacun par un organe de solidarisation, non représenté, par exemple une vis ou un rivet, pour solidariser la platine support 3 à la caisse du véhicule automobile.

Ainsi, la platine support 3 lorsqu'elle est solidarisé à la caisse du véhicule automobile, s'étend dans un plan sensiblement vertical transversal.

La platine support 3 présente une surface d'appui 32 s'étendent sensiblement verticalement, sur laquelle le conduit d'amenée 2 vient s'appuyer.

L'ensemble de fixation 1 comprend aussi des moyens de fixation 6 pour fixer le conduit 2 à la platine support 3. En particulier, les moyens de fixation 6 permettent de maintenir le conduit 2 sur la surface d'appui 32 de la platine support 3.

Le conduit 2 est appuyé sur une portion sensiblement verticale, de sorte qu'il est maintenu sensiblement verticalement, et donc parallèlement à la surface d'appui 32 de la platine support 3.

Les moyens de fixation 6 comprennent une bague 4a et une patte de fixation 4b. On pourra aussi se référer à l'ensemble formé par la bague 4a et la patte de fixation 4b comme étant un organe d'ancrage 4. L'organe d'ancrage 4 est destiné à s'ancrer sur la platine support 3.

La bague 4a des moyens de fixation 6 emprisonne le conduit d'amenée 2.

La bague 4a est formée d'une bande de matière circulaire continue. On entend par le terme de bague 4a une bande de matière obtenue refermée sur elle-même, sans moyen d'ouverture ou de fermeture circonférentielle.

Ici la bague 4a est obtenue par moulage et est installée autour du conduit d'amenée 2 sur une portion verticale, correspondant sensiblement à la portion verticale du conduit 2 devant être plaquée contre la platine support 3.

Autrement dit, en comparaison à l'art antérieur, on positionne la bague 4a sur le conduit 2 à une position comparable à la position définie par les marques repères 10, 10', 10", 10‴ de chaque conduit de l'art antérieur.

Dans ce mode de réalisation, la bague 4a est obtenue par surmoulage sur le conduit 2, de sorte que la bague 4a est obtenue directement en position de fixation sur le conduit 2 et qu'elle y est installée de manière inamovible.

La patte de fixation 4b des moyens de fixation 6 est destinée à être ancrée sur la platine support 3.

La patte de fixation 4b est obtenue d'une pièce avec la bague 4a. La patte de fixation 4b est donc obtenue dans ce mode de réalisation lors de l'étape de surmoulage de la bague 4a sur le conduit 2.

La patte de fixation 4b s'étend dans une direction sensiblement parallèle à l'axe de la bague 4a. Par conséquent, eu égard à la configuration de fixation du conduit 2 sur la platine support 3, la patte de fixation 4b s'étend, par rapport au véhicule automobile, dans une direction sensiblement verticale.

La patte de fixation 4b est éloignée de la circonférence de la bague 4a, par une portion d'éloignement 41 (le repère 4c de la figure 4 doit être remplacé par le repère 41) s'étendant dans une direction radiale de la bague 4a. Ainsi, la portion d'éloignement 41 forme un angle sensiblement droit avec la patte de fixation 4b.

La patte de fixation 4b présente à une extrémité libre opposée à la portion d'éloignement 41, un ergot anti-retour 7 interdisant le retrait de la patte de fixation 4b lorsqu'elle est ancrée sur la platine support 3.

Les moyens de fixation 6 comprennent aussi un logement 5 ménagé dans la platine support 3 pour recevoir la patte de fixation 4b.

Le logement 5 est conformé pour recevoir une patte de fixation 4b, qui est insérée depuis une position dite d'insertion jusqu'à une position engagée, dans laquelle elle est maintenue en position fixe dans le logement 5.

Le logement 5 est dimensionné pour permettre le passage de la patte de fixation 4b et de l'ergot anti-retour 7 de l'extrémité libre de la patte, entre la position d'insertion, et jusqu'à ce que l'ergot anti-retour 7 s'engage dans une ouverture d'engagement 71, ce qui correspond à la position engagée de la patte de fixation 4b.

Lorsque l'ergot anti-retour 7 est engagé dans l'ouverture d'engagement 71, la patte de fixation 4b ne peut être retirée librement du logement 5. Ceci correspond sensiblement à un clipsage de la patte de fixation 4b dans le logement 5.

Le logement 5 s'étend verticalement dans sa longueur, de sorte que la patte de fixation 4b peut être introduite du haut vers le bas, lorsque la platine est solidarisée à la caisse du véhicule automobile, jusqu'à une position engagée.

Le logement 5 présente en outre deux bords longitudinaux opposés à l'ouverture d'engagement 71 formant une liaison glissière avec la patte de fixation 4b, de manière à guider la patte de fixation 4b depuis la position d'insertion jusqu'à la position engagée.

De cette manière il est possible de fixer de manière relativement simple le conduit d'amenée 2 de liquide de refroidissement à la caisse du véhicule automobile.

Dans un autre mode de réalisation, représenté figure 2, l'ensemble de fixation 1 comprend deux conduits d'amenée 2, 2'. La platine 3 présente alors deux logements 5 et les moyens de fixations 6, 6' sont doublés de sorte à ce que chaque conduit d'amenée 2, 2' soit fixé sur la platine par un organe d'ancrage 4, 4' dédié ; chaque organe d'ancrage 4,4' comprenant comme énoncé précédemment une bague 4a et une patte de fixation 4b.

L'invention concerne aussi un procédé de fixation du conduit d'amenée 2 de liquide de refroidissement comprenant une étape au cours de laquelle on obtient les moyens de fixation 6.

Au cours de l'étape d'obtention des moyens de fixation 6, on surmoule l'organe d'ancrage 4 sur le conduit d'amenée 2, de telle sorte que la bague 4a emprisonne le conduit d'amenée 2 sur sa circonférence.

Le surmoulage fournit ainsi une bague 4a continue et une patte de fixation 4b tel que décrit précédemment.

La bague 4a est faite de sorte qu'elle forme un anneau de matière refermé et scellé, solidaire du conduit d'amenée 2.

En particulier, l'anneau 4a ainsi surmoulé ne peut ni être retiré du conduit d'amenée 2, ni glisser le long du conduit d'amenée 2.

Ensuite, on insère la patte de fixation 4b dans le logement 5 de la platine support 3 préalablement fixée à la caisse du véhicule automobile.

Lorsque la patte de fixation 4b atteint la position engagée précédemment décrite, elle est maintenue en position fixe et le conduit d'amenée 2 est alors installé sur la caisse du véhicule automobile.

## Revendications

1. Ensemble comprenant un conduit d'amenée (2, 2') de liquide de refroidissement et un ensemble de fixation (1) du conduit (2, 2') sur une caisse de véhicule automobile, l'ensemble de fixation comprenant une platine support (3) destinée à être montée en position fixe sur ladite caisse, et des moyens de fixation (6, 6') pour fixer ledit conduit (2, 2') à ladite platine support (3), lesdits moyens de fixation (6, 6') comprenant une bague (4a) emprisonnant ledit conduit d'amenée (2, 2') et une patte de fixation (4b) destinée à être ancré sur ladite platine support (3), **caractérisé en ce que** ladite bague (4a) est obtenue par surmoulage sur ledit conduit d'amenée (2, 2'), ladite patte de fixation (4b) s'étendant parallèlement à un axe de ladite bague (4a) de sorte que le conduit d'amenée (2) peut être fixé par un mouvement d'enclenchement de la patte de fixation (4b) à la platine support (3) parallèle à l'axe du conduit d'amenée (2) au niveau de la bague (4a).

2. Ensemble selon la revendication 1, **caractérisé en ce que** les moyens de fixation (6, 6') comprennent un logement (5) ménagé dans ladite platine support (3) pour recevoir ladite patte de fixation (4b).

3. Ensemble selon la revendication 1 ou 2, **caractérisé en ce que** ladite patte de fixation (4b) présente à une extrémité libre un ergot anti-retour (7) interdisant le retrait de la patte de fixation (4b) après qu'elle a été ancrée sur ladite platine support (3).

4. Ensemble selon l'une quelconque des revendications 1 à 3, **caractérisé en ce qu'**il comprend deux moyens de fixation (6, 6') destinés à fixer chacun un conduit d'amenée (2, 2') distinct.

5. Procédé de fixation d'un conduit d'amenée (2) de liquide de refroidissement sur une caisse de véhicule automobile comprenant une étape d'obtention de moyens de fixation (6) comportant une bague (4a) emprisonnant ledit conduit d'amenée (2) et une patte de fixation (4b) destinée à être ancrée sur une platine support (3) montée en position fixe sur ladite caisse du véhicule automobile, ladite patte de fixation (4b) s'étendant parallèlement à un axe de ladite bague (4a) de sorte que le conduit d'amenée (2) peut être fixé par un mouvement d'enclenchement de la patte de fixation (4b) à la platine support (3) parallèle à l'axe du conduit d'amenée (2) au niveau de la bague (4a), l'étape d'obtention desdits moyens de fixation (6) comprend une étape de surmoulage de ladite bague (4a) sur ledit conduit d'amenée (2).

6. Procédé selon la revendication précédente, comprenant en outre une étape de fixation du conduit d'amenée (2) au cours de laquelle on ancre ladite patte de fixation (4b) dans un logement (5) de ladite platine (3).

7. Véhicule automobile comprenant un ensemble comprenant un conduit d'amenée et un ensemble de fixation (1) du conduit d'amenée (2) selon l'une quelconque des revendications 1 à 4.

## Patentansprüche

1. Anordnung, welche eine Zufuhrleitung (2, 2') für Kühlflüssigkeit und eine Anordnung zur Befestigung (1) der Leitung (2, 2') an einer Kraftfahrzeugkarosserie umfasst, wobei die Anordnung zur Befestigung eine Stützplatte (3), die dazu bestimmt ist, in einer festen Position an der Karosserie angebracht zu werden, und Befestigungsmittel (6, 6') zum Befestigen der Leitung (2, 2') an der Stützplatte (3) umfasst, wobei die Befestigungsmittel (6, 6') einen Ring (4a), der die Zufuhrleitung (2, 2') umschließt, und eine Befestigungslasche (4b), die dazu bestimmt ist, an der Stützplatte (3) verankert zu werden, umfassen,
**dadurch gekennzeichnet, dass** der Ring (4a) durch Aufformen auf die Zufuhrleitung (2, 2') erhalten wird, wobei sich die Befestigungslasche (4b) parallel zu einer Achse des Ringes (4a) erstreckt, derart, dass die Zufuhrleitung (2) durch eine zur Achse der Zufuhrleitung (2) am Ring (4a) parallele Bewegung des Einrastens der Befestigungslasche (4b) an der Stützplatte (3) befestigt werden kann.

2. Anordnung nach Anspruch 1, **dadurch gekennzeichnet, dass** die Befestigungsmittel (6, 6') eine in der Stützplatte (3) ausgebildet Aufnahme (5) zum Aufnehmen der Befestigungslasche (4b) umfassen.

3. Anordnung nach Anspruch 1 oder 2, **dadurch gekennzeichnet, dass** die Befestigungslasche (4b) an einem freien Ende einen Sperransatz (7) aufweist, der das Zurückziehen der Befestigungslasche (4b) verhindert, nachdem sie an der Stützplatte (3) verankert worden ist.

4. Anordnung nach einem der Ansprüche 1 bis 3, **dadurch gekennzeichnet, dass** sie zwei Befestigungsmittel (6, 6') umfasst, die dazu bestimmt sind, jeweils eine andere Zufuhrleitung (2, 2') zu befestigen.

5. Verfahren zur Befestigung einer Zufuhrleitung (2) für Kühlflüssigkeit an einer Kraftfahrzeugkarosserie, welches einen Schritt des Erhaltens von Befestigungsmitteln (6) umfasst, die einen Ring (4a), der die Zufuhrleitung (2) umschließt, und eine Befestigungslasche (4b), die dazu bestimmt ist, an einer in einer festen Position an der Kraftfahrzeugkarosserie angebrachten Stützplatte (3) verankert zu werden, aufweisen, wobei sich die Befestigungslasche (4b) parallel zu einer Achse des Ringes (4a) erstreckt, derart, dass die Zufuhrleitung (2) durch eine zur Achse der Zufuhrleitung (2) am Ring (4a) parallele Bewegung des Einrastens der Befestigungslasche (4b) an der Stützplatte (3) befestigt werden kann, wobei der Schritt des Erhaltens der Befestigungsmittel (6) einen Schritt des Aufformens des Ringes (4a) auf die Zufuhrleitung (2) umfasst.

6. Verfahren nach dem vorhergehenden Anspruch, welches außerdem einen Schritt der Befestigung der Zufuhrleitung (2) umfasst, in welchem die Befestigungslasche (4b) in einer Aufnahme (5) der Platte (3) verankert wird.

7. Kraftfahrzeug, welches eine Anordnung, die eine Zufuhrleitung und eine Anordnung zur Befestigung (1) der Zufuhrleitung (2) umfasst, nach einem der Ansprüche 1 bis 4 umfasst.

## Claims

1. Assembly comprising a coolant conveying pipe (2, 2') and a fixing assembly (1) for fixing the pipe (2, 2') to a motor vehicle body, the fixing assembly comprising a support plate (3) intended to be mounted in a fixed position on said body, and fixing means (6, 6') for fixing said pipe (2, 2') to said support plate (3), said fixing means (6, 6') comprising a ring (4a) that traps said conveying pipe (2, 2') and a fixing tab (4b) intended to be anchored to said support plate (3), **characterized in that** said ring (4a) is obtained by over moulding onto said conveying pipe (2, 2'), said fixing tab (4b) extending parallel to an axis of said ring (4a) so that the conveying pipe (2) can be fixed by a movement of interlocking the fixing tab (4b) with the support plate (3) parallel to the axis of the conveying pipe (2) at the ring (4a).

2. Assembly according to Claim 1, **characterized in that** the fixing means (6, 6') comprise a housing (5) formed in said support plate (3) to accept said fixing tab (4b).

3. Assembly according to Claim 1 or 2, **characterized in that** said fixing tab (4b) has a nonreturn lug (7) at a free end to prevent the fixing tab (4b) from being withdrawn once it has been anchored to said support plate (3).

4. Assembly according to any one of Claims 1 to 3, **characterized in that** it comprises two fixing means (6, 6') each one intended to fix a distinct conveying pipe (2, 2').

5. Method for fixing a coolant conveying pipe (2) to a motor vehicle body, comprising a step of obtaining fixing means (6) comprising a ring (4a) trapping said conveying pipe (2) and a fixing tab (4b) intended to be anchored to a support plate (3) mounted in a fixed position on said motor vehicle body, said fixing tab (4b) extending parallel to an axis of said ring (4a) so that the conveying pipe (2) can be fixed by a movement of interlocking the fixing tab (4b) with the support plate (3) parallel to the axis of the conveying pipe (2) at the ring (4a), the step of obtaining said fixing means (6) comprising a step of over moulding said ring (4a) onto said conveying pipe (2).

6. Method according to the preceding claim, further comprising a step of fixing the conveying pipe (2), during which step said fixing tab (4b) is anchored in a housing (5) of said plate (3).

7. Motor vehicle comprising an assembly comprising a conveying pipe and a fixing assembly (1) for fixing the conveying pipe (2) according to any one of Claims 1 to 4,
